# EUROPÄISCHE PATENTANMELDUNG

(11) **EP 1 775 440 A1**
(43) Veröffentlichungstag der Anmeldung: **18.04.2007**
(21) Anmeldenummer: 06019158.2
(22) Anmeldetag: 13.09.2006
(51) Int. Cl.: F02B 29/04, F28D 17/02, F28D 19/04, F02M 25/07, B60H 1/14

(54) **Verfahren und einen Ladeluftkühler zum Kühlen von Ladeluft eines Verbrennungsmotors eines Fahrzeugs**

(30) Priorität: 14.10.2005 DE 102005049691
(71) Anmelder: Behr GmbH & Co. KG, 70469 Stuttgart (DE)
(72) Erfinder: Müller, Daniel, Dipl.-Ing., Kang Qiao Road, Pudong, 201315 Shanghai (CN); Rogg, Stefan, 70193 Stuttgart (DE)

(57) **Zusammenfassung**

Die Erfindung betrifft ein Verfahren zum Kühlen von Ladeluft (L) eines Verbrennungsmotors (30) eines Fahrzeugs, wobei die Ladeluft (L) durch regenerative Wärmeübertragung auf ein Kühlmedium (K) gekühlt wird. Hierzu ist ein rotierbarer Ladeluftkühler (1) vorgesehen, der insbesondere einen eine Vielzahl von Kanälen (10) umfassenden Zylinder (4) aufweist, der mit einer vorgegebenen Drehzahl (n) um eine Achse (2) rotiert wird.

## Beschreibung

Die Erfindung betrifft ein Verfahren zum Kühlen von Ladeluft eines Verbrennungsmotors eines Fahrzeugs. Des Weiteren betrifft die Erfindung einen besonders geeigneten Ladeluftkühler.

Der Ladeluftkühler ist nach einem Kompressor oder Turbolader des Verbrennungsmotors angeordnet. Die im Turbolader angesaugte Luft wird verdichtet und unter Druck in die Zylinder des Verbrennungsmotors befördert. Bei der Kompression oder Verdichtung kommt es zur Temperaturerhöhung der Luft - auch Ladeluft genannt. Da bei höherer Temperatur und gleichem Volumen mehr Druck aufkommt, kann durch Abkühlung der Ladeluft nach der Kompression im Ladeluftkühler die Luftmenge erhöht werden. Dies führt zu einer Leistungssteigerung des Verbrennungsmotors, da je Hub im Zylinder mehr Luft in den Zylinder gelangt und somit mehr Kraftstoff pro Zeiteinheit verbrennen kann.

Aus dem Stand der Technik sind verschiedene Ladeluftkühler bekannt. So kann die Ladeluft beispielsweise direkt durch Luft als Kühlmedium oder indirekt durch Kühlmittel oder Luft als Kühlmedium gekühlt werden. Bei der direkten Ladeluftkühlung mittels Luft, z. B. Umgebungsluft, ist eine Regelung der Ladeluftkühlung nicht möglich. Aus der DE 199 27 607 A1 bzw. der DE 199 62 391 A1 ist beispielsweise ein Kühlmittel gekühlter Ladeluftkühler bekannt. Bei der indirekten Ladeluftkühlung mittels Kühlmittel ist eine Regelung der Ladeluftkühlung häufig nicht vorgesehen, da diese nur mit sehr hohem Aufwand, z. B. durch eine elektrische Kühlmittelpumpe im Sekundärkreislauf, möglich ist.

Der Erfindung liegt daher die Aufgabe zugrunde, ein Verfahren zum Kühlen von Ladeluft eines Verbrennungsmotors eines Fahrzeugs anzugeben, das eine einfache Regelung der Ladeluftkühlung ermöglicht. Des Weiteren ist ein besonders einfach ausgestalteter Ladeluftkühler anzugeben.

Die erstgenannte Aufgabe wird erfindungsgemäß gelöst durch die Merkmale des Anspruchs 1. Hinsichtlich des Ladeluftkühlers wird die Aufgabe durch die Merkmale des Anspruchs 9 gelöst. Vorteilhafte Weiterbildungen sind Gegenstand der Unteransprüche.

Die Erfindung geht dabei von der Überlegung aus, dass für eine Erhöhung der Seuerstoffmoleküle in der Ladeluft und somit eine Leistungssteigerung des Verbrennungsmotors die Ladeluft individuell, einfach und schnell und somit effektiv gekühlt werden sollte. Dabei sollte die Kühlung der Ladeluft einstellbar oder regelbar sein. Zudem sollte die bei der Kühlung der Ladeluft gewonnene Wärme effektiv genutzt werden. Hierzu ist vorgesehen, die Ladeluft anstelle einer rekuperativen Wärmeübertragung regenerativ mittels eines Kühlmediums zu kühlen. Dabei wird die beim Verdichten der Ladeluft in dieser gespeicherte Wärme auf das Kühlmedium indirekt übertragen und zurück gewonnen. Bevorzugt wird als Kühlmedium Luft verwendet. Hierdurch ist sichergestellt, dass zur Motorkühlung vorgesehene Kühlkreisläufe, wie z. B. der Kühlmittel- oder Kältemittelkreislauf, unbeeinflusst bleiben. Zudem ist die Kühlung der Ladeluft in möglichst weiten Grenzen regelbar.

Bei der regenerativen Wärmeübertragung wird vorzugsweise ein rotierbarer Ladeluftkühler verwendet, der insbesondere einen eine Vielzahl von Kanälen umfassenden Zylinder aufweist, der mit einer vorgegebenen Drehzahl um eine Achse rotiert wird. In einer möglichen Ausführungsform wird dabei der Ladeluftkühler alternierend von Ladeluft oder vom Kühlmedium durchströmt. Mit anderen Worten: Der Ladeluftkühler wird zeitlich abwechselnd von Ladeluft und vom Kühlmedium, z. B. Frischluft, durchströmt. Die regenerative Wärmeübertragung wird insbesondere durch die Speicherung der Wärme der verdichteten Ladeluft in den Kanalwänden des Zylinders des Ladeluftkühlers bewirkt.

Für eine abwechselnde Durchströmung der Kanäle des Ladeluftkühlers wird die Ladeluft oder Kühlmedium zeitlich abwechselnd und/oder bereichsweise, z. B. in separaten Bereichen, durch den Ladeluftkühler geführt. Dabei kann der Ladeluftkühler im Querschnitt gesehen teilweise mit Ladeluft und teilweise mit Kühlmedium, insbesondere mit Frischluft oder mit flüssigem Kühlmedium, beaufschlagt werden. Beispielsweise wird die obere Zylinderhälfte, insbesondere deren momentan dort angeordneten Kanäle, mit Ladeluft beaufschlagt, die untere Zylinderhälfte, insbesondere deren momentan dort angeordneten Kanäle, mit Kühlmedium beaufschlagt. Bei einer Drehzahl von null, d.h. der Zylinder steht, wird keine Wärme übertragen. Mit steigender Drehzahl nimmt die Wärmeübertragungsleistung zu. Vorzugsweise wird die übertragene Wärmemenge somit in Abhängigkeit von der Drehzahl des rotierenden Zylinders gesteuert.

In einer zum rotierenden Zylinder alternativen Ausführungsform des Ladeluftkühlers kann der Ladeluftkühler einen statischen Zylinder mit einer Vielzahl von Kanälen umfassen, die endseitig des Zylinders in jeweils angeordnete Zuführungen und Abführungen für die Ladeluft und das Kühlmedium münden, wobei die Zuführungen und die Abführungen mit einer vorgegebenen Drehzahl synchron um eine Achse rotieren. Dabei wird die übertragene Wärmemenge in Abhängigkeit von der Drehzahl der rotierenden Zuführungen und Abführungen gesteuert.

Für eine Nutzung der Wärme der Ladeluft wird z. B. das von der Ladeluft aufgewärmte Kühlmedium, insbesondere aufgewärmte Frischluft dem Fahrzeuginnenraum zur Beheizung zugeführt. Zweckmäßigerweise wird die aufgewärmte Frischluft vor Eintritt in den Fahrzeuginnenraum gefiltert.

Bezüglich des Ladeluftkühlers ist dieser mit einem regenerativen Wärmeübertragungsbereich versehen, der primärseitig in eine Ladeluftleitung für den Verbrennungsmotor und sekundärseitig in eine in einen Fahrzeuginnenraum mündende Kühlmediumleitung angeordnet ist. In einer möglichen Ausführungsform ist der Ladeluftkühler nach dem Prinzip eines Ljungström-Luftvorwärmers ausgeführt. Bevorzugt ist der Wärmeübertragungsbereich durch einen Zylinder mit einer Vielzahl von Kanälen gebildet, über deren Kanalwände die Ladeluft durch regenerative Wärmeübertragung kühlbar ist. Je nach Art und Ausführung des Ladeluftkühlers können die Kanäle durch ihre Anordnung zueinander den Zylinder bilden oder zusätzlich von einem Hohlzylinder umgeben sein.

Zweckmäßigerweise sind die Kanäle im Zylinder parallel zueinander angeordnet und verlaufen entlang der Strömungsrichtung. Dabei ist der Zylinder strömungseingangsseitig und strömungsausgangsseitig mit Zuführungen bzw. Abführungen für Ladeluft und Kühlmedium versehen. Für eine indirekte Wärmeübertragung über die Kanalwandungen sind die Kanäle alternierend von der heißen Ladeluft oder vom kühlen Kühlmedium durchströmbar. Alternativ können die heiße Ladeluft einer Teilanzahl von Kanälen und das kühle Kühlmedium einer benachbarten Teilanzahl von Kanälen zuführbar sein. Durch Rotation der Kanäle um eine Drehachse werden somit die Kanäle zeitweise von Ladeluft und zeitweise vom Kühlmedium durchströmt. Die Wärmeübertragung ist dabei von der Temperaturdifferenz abhängig. Zur Steuerung der Wärmeübertragungsleistung ist der Zylinder vorzugsweise um eine Längsachse rotierbar angeordnet. Durch Änderung der Drehzahl wird die Wärmeübertragungsleistung eingestellt und geregelt.

In einer möglichen Ausführungsform ist der Zylinder hierzu über einen riemengesteuerten Antrieb in eine Drehbewegung versetzbar. Dabei umfasst der riemengesteuerte Antrieb einen Motor zur Ansteuerung einer Welle, die mit einen den Zylinder umgebenden Riemen verbunden ist. Alternativ ist der Zylinder über einen zahnradgesteuerten Antrieb in eine Drehbewegung versetzbar. Dabei umfasst der zahnradgesteuerte Antrieb einen Motor zur Ansteuerung einer Welle, die mit einem Zahnrad versehen ist, das in einen den Zylinder umgebenden Zahnkranz eingreift. In einer weiteren möglichen Ausführungsform ist der Zylinder stehend ausgebildet, wobei die Zuführungen und Abführungen um eine Drehachse rotierbar angeordnet sind.

Die mit der Erfindung erzielten Vorteile bestehen insbesondere darin, dass durch einen regenerativen Ladeluftkühler die Kühlung der Ladeluft auf einfache Art und Weise steuer- bzw. regelbar ist. Darüber hinaus ist eine besonders kompakte Bauweise ermöglicht, so dass der Ladeluftkühler im Motor-Bauraum packageoptimal angeordnet werden kann. Die durch die regenerative Ladeluftkühlung aufgeheizte Frischluft kann vorteilhafterweise zur Aufheizung des Fahrzeuginnenraums genutzt werden. Somit kann ein Zuheizer, z. B. ein Brennstoffzuheizer, ein so genannter PTC, ersetzt oder zumindest ergänzt werden.

Ausführungsbeispiele der Erfindung werden anhand einer Zeichnung näher erläutert. Darin zeigen:
- Fig. 1 bis 3: schematisch einen Ladeluftkühler zur Kühlung von Ladeluft eines Fahrzeugs mit einem um eine Achse rotierbaren Zylinder,
- Fig. 4 bis 6: schematisch eine alternative Ausführungsform eines Ladeluftkühlers mit einem alternativen Antrieb zum Drehen des Zylinders,
- Fig. 7 bis 10: schematisch eine alternative Ausführungsform eines Ladeluftkühlers mit einem stehenden Zylinder und rotierbaren Zu- und Abführungen,
- Fig. 11: schematisch ein Ansaugluft- und Abgassystem eines Verbrennungsmotors mit einem in einer Luftzuführung angeordneten, regenerativen Ladeluftkühler, und
- Fig. 12: schematisch eine alternative Ausführungsform für ein Ansaugluft- und Abgassystem eines Verbrennungsmotors mit einem in einer Luftzuführung angeordneten, regenerativen Ladeluftkühler und einer Zuführung der dabei aufgeheizten Frischluft in den Fahrzeuginnenraum.

Einander entsprechende Teile sind in allen Figuren mit den gleichen Bezugszeichen versehen.

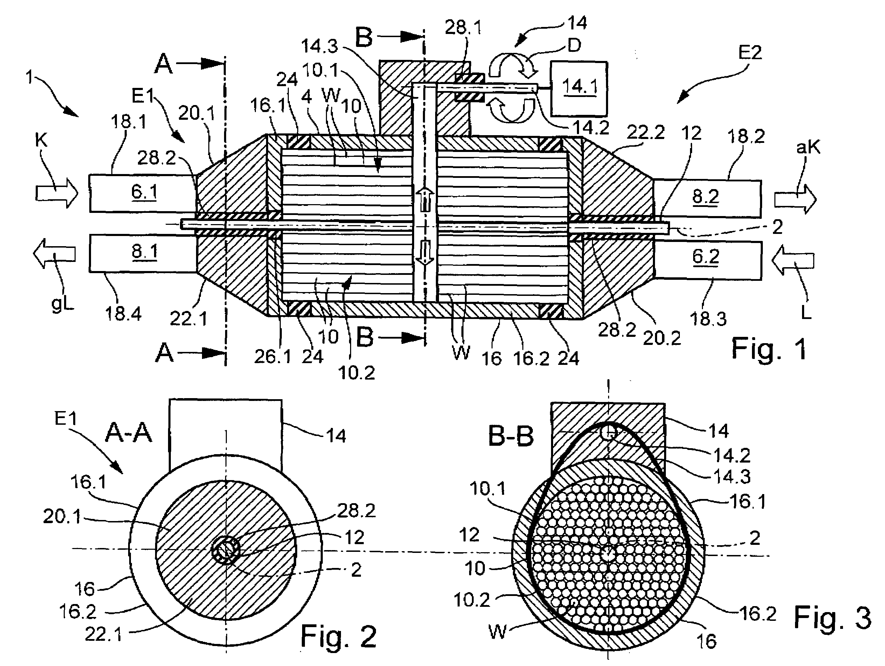

Figur 1 zeigt einen als regenerativen Wärmeübertrager ausgebildeten Ladeluftkühler 1 zur Kühlung von Ladeluft L indirekt mittels eines Kühlmediums K. Der Ladeluftkühler 1 umfasst in dieser Ausführungsform einen um eine Achse 2 rotierbaren Zylinder 4. Der Ladeluftkühler 1 ist nach dem so genannten Ljungström-Prinzip aufgebaut.

Dabei wird die von einem nicht näher dargestellten Turbolader verdichtete und dabei aufgeheizte Ladeluft L dem Ladeluftkühler 1 zugeführt. Im Ladeluftkühler 1 wird die Ladeluft L durch regenerative Wärmeübertragung mittels des kalten Kühlmediums K gekühlt. Als Kühlmedium K wird beispielsweise Frischluft oder ein Kältemittel zugeführt.

In einer möglichen Ausführungsform des Ladeluftkühlers 1 wird dieser zeitlich abwechselnd von der heißen Ladeluft L bzw. vom kalten Kühlmedium K durchströmt. Zusätzlich können die heiße Ladeluft L und das kalte Kühlmedium K in entgegengesetzter Strömungsrichtung durch den Ladeluftkühler 1 strömen, wie dies durch die Richtung der Strömungspfeile für die Ladeluft L und das Kühlmedium K angedeutet ist. Dies ermöglicht eine hohe Wärmeübertragung. Zum Durchströmen des Ladeluftkühlers 1 mit Ladeluft L und Kühlmedium K sind im Anschlussbereich E1 und E2 des Ladeluftkühlers 1 Zuführungen 6.1 bzw. 6.2 und Abführungen 8.1 bzw. 8.2 vorgesehen.

Der Ladeluftkühler 1 ist für eine regenerative Ladeluftkühlung aus einem Zylinder 4 gebildet. Der Zylinder 4 weist eine Anzahl von Kanälen 10 auf, die in Längsrichtung des Ladeluftkühlers 1 verlaufen. Die Kanäle 10 können derart zueinander parallel angeordnet sein, dass deren äußere Form den Zylinder Z bildet. Alternativ können die Kanäle 10 von einem Hohlzylinder umgeben oder in einem zylinderförmigen Hohlkörper angeordnet sein. In der Ausführungsform gemäß Figur 1 sind die Kanäle 10 radialsymmetrisch um die Achse 2 angeordnet. Alternativ können mehrere Kanäle 10 zu Kanalbündeln 10.1 bzw. 10.2 zusammengefasst werden, die symmetrisch um die Achse 2 angeordnet sind. Zwischen den Kanalbündeln 10.1 und 10.2 kann eine nicht näher dargestellte Trenn- oder Säuberungszone angeordnet sein.

Die Wärmeübertragung wird durch die Speicherung der Wärme in den Kanalwänden W der Kanäle 10 und durch die Rotationsbewegung des Zylinders 4 bewirkt. Dabei wird die aufgeheizte Ladeluft L nur einem Teilbereich des Zylinders 4 zugeführt; z. B. der unteren Zylinderhälfte, wie in der Figur 1 dargestellt. Der oberen Zylinderhälfte wird das kalte Kühlmedium K zugeführt. Durch Rotation des Zylinders 4 werden die Kanäle 10 somit abwechselnd von Ladeluft L bzw. Kühlmedium K durchströmt. Die nach Durchströmen der Kanäle 10 durch die heiße Ladeluft L aufgeheizten Kanalwände W geben beim anschließenden Durchströmen der Kanäle 10 mit Kühlmedium K die Wärme an das Kühlmedium K ab.

Zum Rotieren des Zylinders 4 um die Achse 2 ist der Zylinder 4 drehbar auf einer Welle 12 (auch Zylinderwelle genannt) gelagert. Der Zylinder 4 wird in diesem Ausführungsbeispiel über einen riemengesteuerten Antrieb 14 in eine Drehbewegung D mit einer vorgebbaren Drehzahl n versetzt. Der riemengesteuerte Antrieb 14 umfasst einen Motor 14.1, der über eine parallel zur Zylinderwelle 12 angeordneten weiteren Welle 14.2 (auch Antriebswelle genannt) den Zylinder 4 in die Drehbewegung D versetzt. Dazu ist die Antriebswelle 14.2 mit einen den Zylinder 4 umgebenden Riemen 14.3 verbunden. Der Motor 14.1 ist beispielsweise ein elektrischer, pneumatischer, hydraulischer oder hydrostatischer Antrieb. Alternativ kann die erforderliche Drehbewegung D durch eine Ankopplung an den Verbrennungsmotor des Fahrzeugs bewirkt werden. Die Drehrichtung D kann beliebig bewirkt werden. Statt eines Riemens 14.3 kann auch eine Kette, ein Band oder ähnliches verwendet werden.

Der Zylinder 4 mit den Kanälen 10 ist von einem Gehäuse 16 umgeben. Das Kühlmedium K strömt über einen zugehörigen Anschlussstutzen 18.1 für die Zuführung 6.1 und einen daran anschließenden Diffusor 20.1 in das Gehäuse 18. Der Diffusor 20.1 verteilt das Kühlmedium K auf eine zugehörige Gehäusehälfte 16.1. Hierzu ist der Ladeluftkühler 1 zweigeteilt ausgebildet. D.h. das Gehäuse 16 ist unterteilt in zwei Zylinderhälften, in denen jeweils ein Kanalbündel 10.1 bzw. 10.2 angeordnet ist. Dabei wird die obere Gehäusehälfte 16.1 vom Kühlmedium K und die untere Gehäusehälfte 16.2 von Ladeluft L durchströmt. Vorzugsweise ist der Motor 14.1 im Bereich der vom Kühlmedium K durchströmten Gehäusehälfte 16.1 angeordnet. Hierdurch ist die Temperaturbelastung des Motors 14.1 niedrig gehalten.

Beim Betrieb des Ladeluftkühlers 1 wird das über den zugehörigen Anschlussstutzen 18.1 und die Zuführung 6.1 einströmende Kühlmedium K mittels des zugehörigen Diffusors 20.1 auf das in der oberen Gehäusehälfte 16.1 angeordnete Kanalbündel 10.1 verteilt. Beim Durchströmen der Kanalbündel 10.1 des Zylinders 4 wird das Kühlmedium K mittels der aufgeheizten Ladeluft L indirekt aufgeheizt, indem die in den Kanalwänden W gespeicherte Wärme auf das Kühlmedium K übertragen wird. Anschließend tritt das Kühlmedium K strömungsausgangsseitig in einen zugehörigen Sammler 22.2 ein, der das aufgewärmte Kühlmedium aK bündelt und über einen Anschlussstutzen 18.2 für die Abführung 8.2 abführt.

Die mit entgegensetzter Strömungsrichtung den Ladeluftkühler 1 durchströmende heiße Ladeluft L strömt im Anschlussbereich E2 über einen zugehörigen Anschlussstutzen 18.3 und einen zugehörigen Diffusor 20.2 in den Ladeluftkühler 1, insbesondere in die untere Gehäusehälfte 16.2 ein. Der zugehörige Diffusor 20.2 verteilt die heiße Ladeluft L auf die untere Gehäusehälfte 16.2 und auf das in dieser Gehäusehälfte 16.2 momentan befindliche Kanalbündel 10.2. Die heiße Ladeluft L durchströmt das betreffende Kanalbündel 10.2 und kühlt sich dabei ab, indem die Wärme an die durch das Kühlmedium K gekühlten Kanalwände W abgegeben wird. Die gekühlte Ladeluft gL tritt über einen zugehörigen Sammler 22.1 aus. Der Sammler 22.1 bündelt die gekühlte Ladeluft gL und führt sie über einen zugehörigen Anschlussstutzen 18.4 für die Abführung 8.1 ab.

Um zu verhindern, dass das Kühlmedium K und die Ladeluft L durch einen zwischen den Gehäusehälften 16.1 und 16.2 vorhandenen Spalt, insbesondere einen zwischen der Innenwand des Gehäuses 16 und der Außenwand des Zylinders 4 oder der Kanalbündel 10.1 bzw. 10.2 vorhandenen Spalt hindurch treten kann, sind mehrere Ringdichtungen 24 vorgesehen. Um im Bereich der Ringdichtungen 24 eine gute Dichtwirkung zu erzielen, kann das jeweilige Kanalbündel 10.1, 10.2 im Bereich der Ringdichtungen 24 mit einer Manschette versehen sein, auf der die Ringdichtung 24 gleitet.

Um eine Vermischung vom aufgewärmten Kühlmedium aK und gekühlter Ladeluft gL zu vermeiden, ist zwischen dem Diffusor 20.1 des kalten Kühlmediums K und dem Sammler 22.1 der gekühlten Ladeluft gL eine Dichtung 26.1, beispielsweise eine Schleifdichtung, vorgesehen. Die Dichtung 26.1 dichtet dabei zum einen zur Trennebene zwischen dem Diffusor 20.1 und dem Sammler 22.1 ab. Zum anderen dichtet die Dichtung 26.1 auch zu den Kanalbündeln 10.1, 10.2 ab.

Analog dazu ist im gegenüber liegenden Anschlussbereich E2 zur Verhinderung der Durchmischung von aufgeheiztem Kühlmedium aK mit heißer Ladeluft L im Bereich zwischen dem betreffenden Diffusor 20.2 und dem Sammler 22.2 eine Dichtung 26.2, beispielsweise eine Schleifdichtung, vorgesehen. Zusätzlich ist der Ladeluftkühler 1 mit einer Wellendichtung 28.1 und 28.2 für die Antriebswelle 14.2 bzw. die Zylinderwelle 2 am jeweils zugehörigen Durchtritt durch das Gehäuse 16 abgedichtet.

Die Figuren 2 und 3 zeigen jeweils einen Querschnitt A-A bzw. B-B durch den Ladeluftkühler 1 gemäß Figur 1 im Anschlussbereich E1 bzw. im Anschlussbereich E2 des riemengesteuerten Antriebs 14.

Beim Betrieb des regenerativen Ladeluftkühlers 1 oder Wärmeübertragers wird der Zylinder 4 mit den Kanälen 10 um die Drehachse 2 mit der Drehzahl n gedreht. Dadurch befindet sich jedes Kanalbündel 10.1 bzw. 10.2 für eine Zeitdauer von 0,5n in der jeweiligen Gehäusehälfte 16.1 bzw. 16.2 und wird einmal von der heißen Ladeluft L bzw. vom kalten Kühlmedium K durchströmt. Beim Durchströmen der Kanäle 10 des betreffenden Kanalbündels 10.1 bzw. 10.2 mit heißer Ladeluft L werden die Kanalwände W erwärmt. Anschließend werden die von der heißen Ladeluft L erwärmten Kanäle 10 des Kanalbündels 10.2 für die Zeitdauer von 0,5n durch Drehen des Zylinders 4 in die Gehäusehälfte 16.1 gedreht, die vom Kühlmedium K, z. B. kalter Luft, durchströmt wird. D.h. die erwärmten Kanäle 10 des Kanalbündels 10.2 werden nun vom kalten Kühlmedium K durchströmt, wobei sich die Kanalwände W wieder abkühlen, so dass sie bei der nächsten Drehung des Zylinders 4 und somit beim Durchströmen mit der heißen Ladeluft L wieder Wärme von dieser aufnehmen können.

Die Geschwindigkeit, mit der sich die Kanalwände W erwärmen, und die Wärmemenge, die dadurch in den Kanalwänden W gespeichert wird, hängen von der Wärmeleitfähigkeit, der Wärmekapazität und der Dichte des Wandmaterials der Kanalwände W sowie von der Drehzahl n, mit der der Zylinder 4 gedreht wird, ab. Zudem hängt die speicherbare Wärmemenge auch von der Wandstärke und vom Wärmeübergangskoeffizienten der Wandoberfläche ab. Je nach Vorgabe werden eine entsprechende Kanalwandstruktur und ein entsprechendes Material gewählt. Beispielsweise sind die Kanäle 10 aus Edelstahl mit einer Wandstärke von 0,05 mm bei einem Kanaldurchmesser von 1,14 mm gebildet. Um eine optimale Wärmeübergangsleistung bei geringem Druckabfall und kompakter Bauform des Ladeluftkühlers 1 zu erzielen, weist der Ladeluftkühler 1 vorzugsweise folgende beispielhafte Abmessungen auf. Der Durchmesser der Kanäle 10 kann zwischen 1,0 mm bis 1,5 mm liegen. Die Wandstärke der Wandung W sollte höchstens 0,3 mm betragen, wobei das Verhältnis von Länge zu Durchmesser der Kanalbündel 10.1, 10.2 beispielsweise im Bereich zwischen 2 und 4 liegt. Zusätzlich kann das jeweilige Kanalbündel 10.1 und 10.2 katalytisch beschichtet sein. Insbesondere sind die Innenwände der Kanäle 10 katalytisch beschichtet.

Darüber hinaus sind die Kanäle 10 besonders temperaturbeständig und korrosionsfest auszuführen. Hierzu sind die Kanäle 10 beispielsweise aus hochlegierten Stahl, Titan, Keramik, Silikatglas oder Aluminiumoxid gebildet. Die Kanäle 10 sind derart zueinander angeordnet, dass sie mit ihren Außenwänden den Zylinder 4 bzw. die beiden Kanalbündel 10.1, 10.2 (= zwei Zylinderhälften) des Zylinders 4 bilden. Bei metallischen Werkstoffen kann das jeweilige Kanalbündel 10.1 und 10.2 aus einer Wicklung geformt sein, in der sich eine geprägte und eine glatte Blechlage abwechseln, wobei die daraus resultierenden Hohlräume die Kanäle 10 bilden. Die eingeprägte Struktur kann beispielsweise die Form von Wellen, Mäandern oder einer Zickzacklinie aufweisen. Dabei werden die Kanäle 10 durch die Struktur, die entlang der Zylinderachse oder der Drehachse 2 verläuft, gebildet.

Je nach Einsatz des Ladeluftkühlers 1 in einem Personenkraftfahrzeug oder einem Nutzfahrzeug variieren die Abmessungen sowie das Material bedingt durch die verschieden hohen mechanischen Belastungen und Temperaturbeanspruchungen. Die hier genannten Abmessungen und Materialien sind Beispiele; es können auch andere geeignete Abmessungen oder Materialien eingesetzt werden.

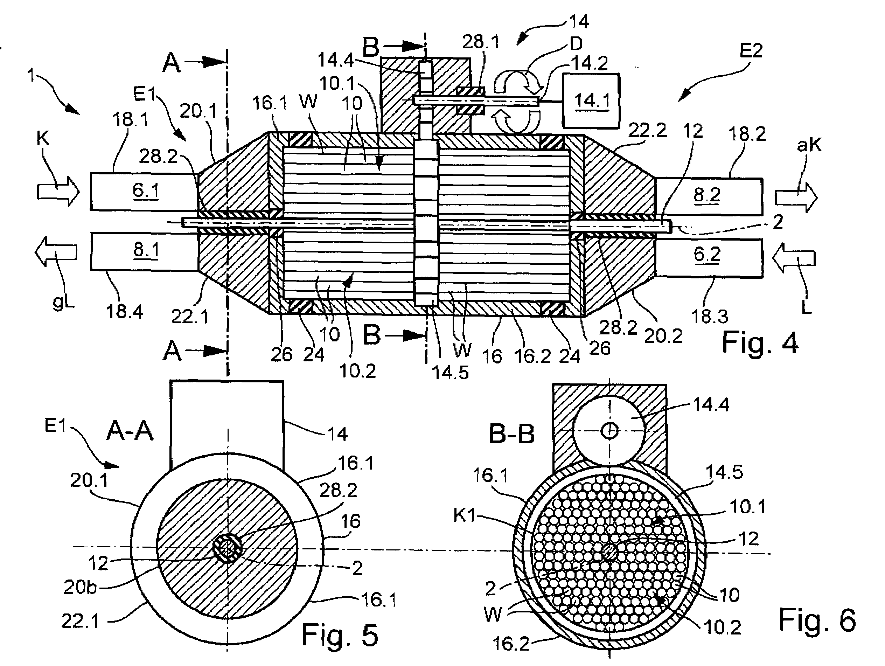

Figur 4 zeigt eine alternative Ausführungsform für einen Ladeluftkühler 1 zur Kühlung von Ladeluft L mit einem alternativen Antrieb 14 zum Drehen des Zylinders 4. Der Antrieb 14 ist als ein zahnradgesteuerter Antrieb ausgebildet. Der zahnradgesteuerte Antrieb umfasst einen Motor 14.1 zur Ansteuerung der Antriebswelle 14.2, die mit einem Zahnrad 14.4 versehen ist, das in einen den Zylinder 4 umgebenden Zahnkranz 14.5 eingreift. Der Zahnkranz 14.5 umschließt dabei den aus den Kanälen 10 gebildeten Zylinder 4 konzentrisch. Alternativ zum Zahnrad 14.4 kann auch ein Reibrad verwendet werden, wobei dann der Zahnkranz 14.5 durch eine konzentrische Manschette ersetzt wird. Figuren 5 und 6 zeigen analog zu Figuren 2 und 3 den Querschnitt A-A bzw. B-B im Diffusor-Sammler-Bereich bzw. im Antriebsbereich des Ladeluftkühlers 1.

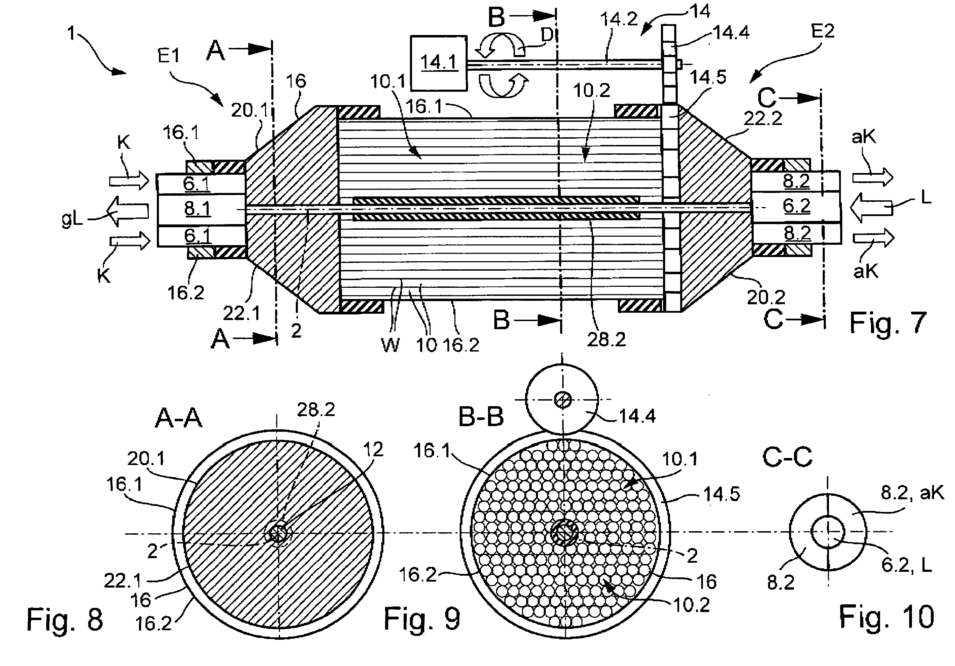

Figur 7 zeigt eine weitere alternative Ausführungsform für einen Ladeluftkühler 1 zur Kühlung von Ladeluft L. Im Unterschied zu den oben beschriebenen Wärmeübertragern bzw. Ladeluftkühler 1 mit rotierbaren Kanälen 10 durch den rotierbaren Zylinder 4 sind beim Ladeluftkühler 1 gemäß Figur 7 der Zylinder 4 und somit die Kanäle 10 und die Kanalbündel 10.1, 10.2 stehend ausgeführt. Im Anschlussbereich E1 und E2 sind die jeweils vorgesehenen Anschlussstutzen 18.1, 18.4 bzw. 18.2, 18.3, sowie der betreffende Diffusor 20.1 bzw. 20.2 und der betreffende Sammler 22.1 bzw. 22.2 rotierbar angeordnet. Je nach Art und Ausführung kann der Antrieb 14 zahnradgesteuert (wie dargestellt) oder riemengesteuert ausgebildet sein. Die Zuführung 6.1 für das Kühlmedium K liegt außen um die Abführung 8.1 für die Ladeluft L herum. Die Zuführung 6.2 für die Ladeluft L ist innen liegend in eine als beispielsweise doppelwandiges Hohlrohr ausgebildete Abführung 8.2 angeordnet. Die Anschlussbereiche E1 und E2 werden mittels des Antriebs 14 rotiert. Hierdurch wird der Ladeluftkühler 1 bereichsweise abwechselnd von Ladeluft L bzw. Kühlmedium K durchströmt, so dass eine Wärmeübertragung indirekt über die Kanalwände W der Kanäle 10 bewirkt wird. Figuren 8 bis 9 zeigen verschiedene Querschnitte A-A, B-B, C-C durch den Ladeluftkühler 1 gemäß Figur 7.

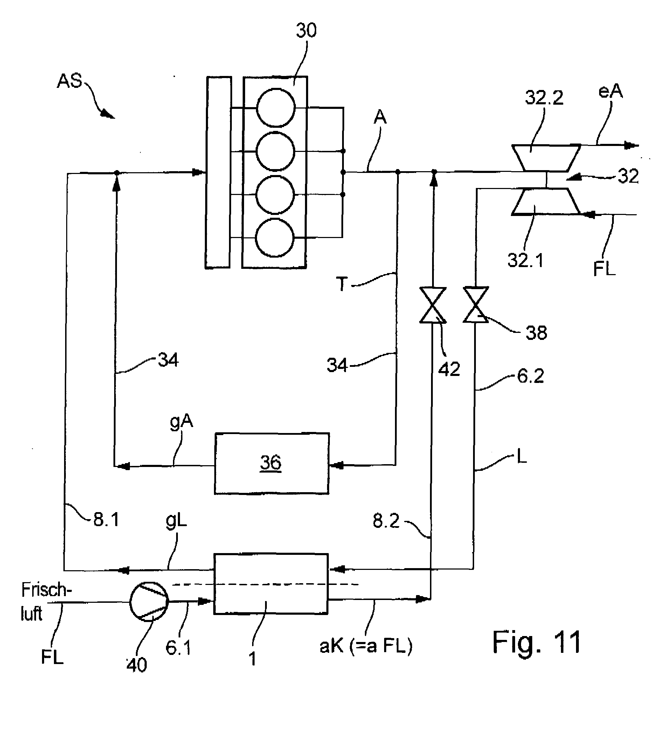

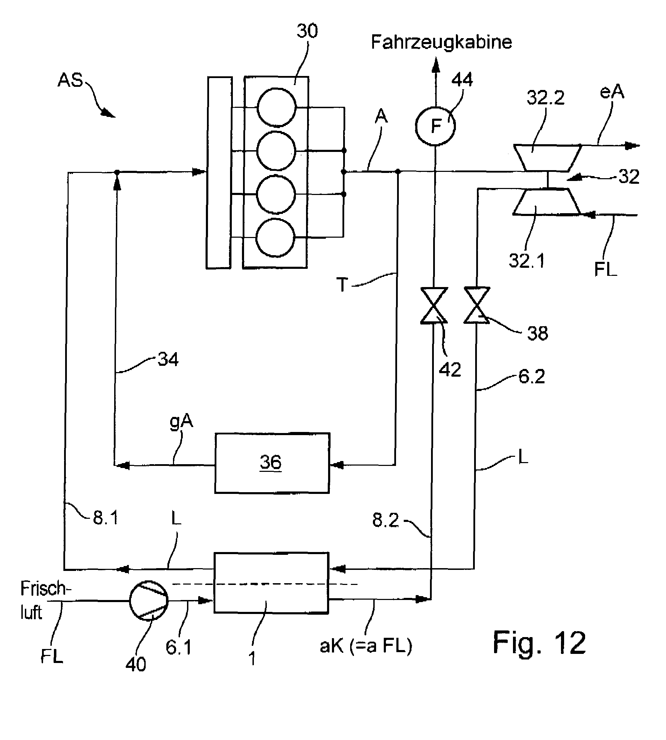

Figuren 11 und 12 zeigen schematisch verschiedene alternative Ansaugluft- und Abgassysteme AS eines Verbrennungsmotors 30, z. B. eines Dieselmotors. Einer Verdichterstufe 32.1 eines Turboladers 32 wird dabei Frischluft FL zugeführt und dort verdichtet. Die verdichtete Frischluft FL wird als erhitzte Ladeluft L über die Zuführung 6.2 (auch Ladeluftleitung genannt) dem regenerativen Ladeluftkühler 1 zugeführt und dort mittels des Kühlmediums K, z. B. ebenfalls Frischluft, gekühlt. Die abgekühlte Ladeluft gL wird über die Abführung 8.1 anschließend dem Verbrennungsmotor 30 zugeführt. Das aus dem Verbrennungsmotor 30 austretende Abgas A wird in eine Turbinenstufe 32.2 des Turboladers geleitet, wo die Nutzarbeit zum Antrieb der Verdichterstufe 32.1 entnommen wird. Das in der Turbinenstufe 32.2 entspannte Abgas eA wird abgeführt.

Zur regenerativen Kühlung der heißen Ladeluft L wird dem Ladeluftkühler 1 über die Zuführung 6.1 (auch Kühlmediumleitung genannt) als Kühlmedium K beispielsweise Frischluft FL zugeführt. Das aufgeheizte Kühlmedium aK wird über die Abführung 8.2 dem Abgas A des Verbrennungsmotors 30 zugemischt und anschließend der Turbinenstufe 32.2 zugeführt.

Ein Teilstrom T des Abgases A wird über eine Abgasrückführung 34 einem Wärmeübertrager 36 zugeführt und dort gekühlt und als gekühltes Abgas gA strömungseingangsseitig dem Verbrennungsmotor 30 zugeführt. Als Kühlmedium für das Abgas A wird dem Wärmeübertrager 36 in nicht näher dargestellter Art und Weise sekundärseitig Luft, z. B. Frischluft, Umgebungsluft oder aber auch Ladeluft, zugeführt. Auch Ladeluft kann zur regenerativen Kühlung von Abgas A verwendet werden, da Ladeluft wärmer als Frisch- oder Umgebungsluft und kälter als das zurückgeführte Abgas A ist.

Zur Steuerung der Menge der durch den Ladeluftkühler 1 zu kühlenden Ladeluft L ist in die Zuführung 6.2 ein Ventil 38, z. B. ein Regel- oder Rückschlagventil, angeordnet. Auch kann die sekundärseitig zur Kühlung der Ladeluft L zugeführte Frischluft FL mittels eines Verdichters 40 verdichtet werden. Über ein weiteres Ventil 42 kann die dem Abgas A zuzuführende Menge an aufgeheizter Frischluft aFL (= aK) gesteuert werden.

Der Ladeluftkühler 1 ist als ein regenerativer Wärmeübertrager in der bereits oben beschriebenen Art und Weise ausgeführt. Die Steuerung und/oder Regelung des Ladeluftkühlers 1 erfolgt wie bereits oben beschrieben durch Änderung der Drehzahl n des Zylinders 4 und der Kanäle 10 gemäß Figur 1 bzw. Figur. 4.

Bei einem stehenden Zylinder 4 und einer Drehzahl n von null stehen die Kanalbündel 10.1, 10.2 und es wird keine Wärme übertragen. Das Kühlmedium K und die Ladeluft L werden parallel zueinander in dem jeweiligen Kanalbündel 10.1 bzw. 10.2 geführt.

Mit steigender Drehzahl n nimmt die übertragende Wärmemenge und somit die Wärmeübertragungsleistung zu, bis sie einen Maximalwert erreicht. Bei hohen Drehzahlen n tritt eine starke Vermischung der Ströme des Kühlmediums K und der Ladeluft L auf, weil die Drehbewegung der Kanalbündel 10.1, 10.2 auch das in den Kanälen 10 enthaltene Gasvolumen mitschleppt. Die übertragenen Wärmemengen und somit die Wärmeübertragungsleistung wird hierdurch negativ beeinflusst. Bei sehr hohen Drehzahlen n geht sie gegen null.

Für den Fall, dass es sich bei den beiden Ventilen 38, 42 um Regelventile handelt, ist es vorteilhaft deren Betätigung zu koppeln. Die Kopplung der beiden Ventile 38 und 42 stellt sicher, dass bei einem vorgegebenen Strom an Ladeluft L immer ein hinreichend großer Strom an Kühlmedium K, z. B. kalter Frischluft FL, durch den Ladeluftkühler 1 geführt wird. Beispielsweise können beide Ströme gleich groß eingestellt werden. Hierdurch wird sichergestellt, dass es zu keiner Überhitzung des Ladeluftkühlers 1 kommt. Zudem sind die Ströme in der Verdichterstufe 32.1 und der Turbinenstufe 32.2 des Turboladers 32 im Wesentlichen gleich groß und unabhängig von der Menge.

In Figur 12 wird die aufgeheizte Frischluft aFL zusätzlich dem Fahrzeuginnenraum zugeführt. Eine eventuelle katalytische Beschichtung des Ladeluftkühlers 1 sowie ein strömungsausgangsseitig in der Abführung 8.2 angeordneter Filter 44 sorgen für die Schadstofffreiheit der in den Fahrzeuginnenraum strömenden aufgeheizten Frischluft aFL.

## Patentansprüche

1. Verfahren zum Kühlen von Ladeluft (L) eines Verbrennungsmotors (30) eines Fahrzeugs, wobei die Ladeluft (L) durch regenerative Wärmeübertragung auf ein Kühlmedium (K) gekühlt wird.

2. Verfahren nach Anspruch 1, wobei zur regenerativen Wärmeübertragung ein rotierbarer Ladeluftkühler (1) verwendet wird, der insbesondere einen eine Vielzahl von Kanälen (10) umfassenden Zylinder (4) aufweist, der mit einer vorgegebenen Drehzahl (n) um eine Achse (2) rotiert wird.

3. Verfahren nach Anspruch 2, wobei die übertragene Wärmemenge in Abhängigkeit von der Drehzahl (n) des rotierenden Zylinders (4) gesteuert wird.

4. Verfahren nach Anspruch 1, wobei der Ladeluftkühler (1) einen statischen Zylinder (4) mit einer Vielzahl von Kanälen (10), die endseitig des Zylinders (4) in jeweils angeordnete Zuführungen (6.1, 6.2) und Abführungen (8.1, 8.2) für die Ladeluft (L) und das Kühlmedium (K) münden, wobei die Zuführungen (6.1, 6.2) und die Abführungen (8.1, 8.2) mit einer vorgegebenen Drehzahl (n) synchron um eine Achse (2) rotieren.

5. Verfahren nach Anspruch 4, bei dem die übertragene Wärmemenge in Abhängigkeit von der Drehzahl (n) der rotierenden Zuführungen (6.1, 6.2) und Abführungen (8.1, 8.2) gesteuert wird.

6. Verfahren nach einem der Ansprüche 1 bis 5, wobei der Ladeluftkühler (1) alternierend von Ladeluft (L) oder vom Kühlmedium (K), insbesondere Frischluft (FL) oder flüssiges Kühlmedium durchströmt wird.

7. Verfahren nach einem der Ansprüche 1 bis 6, wobei der Ladeluftkühler (1) bereichsweise von Ladeluft (L) oder vom Kühlmedium (K), insbesondere Frischluft (FL) oder flüssiges Kühlmedium durchströmt wird.

8. Verfahren nach einem der Ansprüche 1 bis 7, wobei das von der Ladeluft (L) aufgewärmte Kühlmedium (aK), insbesondere aufgewärmte Frischluft (aFL) dem Fahrzeuginnenraum zur Beheizung zugeführt wird.

9. Ladeluftkühler (1) zum Kühlen von Ladeluft (L) eines Verbrennungsmotors (30) eines Fahrzeugs, mit einem regenerativen Wärmeübertragungsbereich, der primärseitig in eine Ladeluftleitung (6.2) für den Verbrennungsmotor (30) und sekundärseitig in eine in einen Fahrzeuginnenraum mündende Kühlmediumleitung (6.1) angeordnet ist.

10. Ladeluftkühler (1) nach Anspruch 9, bei dem der Wärmeübertragungsbereich durch einen Zylinder (4) mit einer Vielzahl von Kanälen (10) gebildet ist, über deren Kanalwände (W) die Ladeluft (L) durch regenerative Wärmeübertragung kühlbar ist.

11. Ladeluftkühler (1) nach Anspruch 9 oder 10, bei dem die Kanäle (10) im Zylinder (4) parallel zueinander angeordnet sind und entlang der Strömungsrichtung verlaufen.

12. Ladeluftkühler (1) nach einem der Ansprüche 9 bis 11, bei dem der Zylinder (4) strömungseingangsseitig und strömungsausgangsseitig mit Zuführungen (6.1, 6.2) und Abführungen (8.1, 8.2) für Ladeluft (L) und Kühlmedium (K) versehen ist.

13. Ladeluftkühler (1) nach einem der Ansprüche 9 bis 12, bei dem die Kanäle (10) alternierend von Ladeluft (L) oder vom Kühlmedium (K) durchströmbar sind.

14. Ladeluftkühler (1) nach einem der Ansprüche 9 bis 13, bei dem der Zylinder (4) um eine Längsachse (2) rotierbar angeordnet ist.

15. Ladeluftkühler (1) nach einem der Ansprüche 9 bis 14, bei dem der Zylinder (4) über einen Antrieb (14), der riemengesteuert ist, in eine Drehbewegung (D) versetzbar ist.

16. Ladeluftkühler (1) nach Anspruch 15, bei dem der riemengesteuerte Antrieb einen Motor (14.1) zur Ansteuerung einer Welle (14.2). umfasst, die mit einen den Zylinder (4) umgebenden Riemen (14.3) verbunden ist.

17. Ladeluftkühler (1) nach einem der Ansprüche 9 bis 14, bei dem der Zylinder (4) über einen Antrieb (14), der zahnradgesteuert ist, in eine Drehbewegung (D) versetzbar ist.

18. Ladeluftkühler (1) nach Anspruch 17, bei dem der zahnradgesteuerte Antrieb einen Motor (14.1) zur Ansteuerung einer Welle (14.2) umfasst, die mit einem Zahnrad (14.4) versehen ist, das in einen den Zylinder (4) umgebenden Zahnkranz (14.5) eingreift.

19. Ladeluftkühler (1) nach einem der Ansprüche 9 bis 13, bei dem der Zylinder (4) stehend ausgebildet ist, wobei die Zuführungen (6.1, 6.2) und Abführungen (8.1, 8.2) um eine Drehachse (D) rotierbar angeordnet sind.
